# EUROPÄISCHE PATENTSCHRIFT

(11) **EP 0 901 862 B1**
(45) Veröffentlichungstag und Bekanntmachung des Hinweises auf die Patenterteilung: **23.04.2008**
(21) Anmeldenummer: 98115872.8
(22) Anmeldetag: 22.08.1998
(51) Int. Cl.: B23D 37/10, B23D 41/08

(54) **Räummaschine**
Broaching machine
Machine de brochage

(30) Priorität: 08.09.1997 DE 19739315
(43) Veröffentlichungstag der Anmeldung: 17.03.1999
(73) Patentinhaber: Gierth, Christian, 58809 Neuenrade (DE)
(72) Erfinder: Gierth, Christian, 58809 Neuenrade (DE)
(74) Vertreter: Schröter, Martin

(56) Entgegenhaltungen:
- DE-A- 2 159 956
- DE-C- 383 219
- DE-U- 29 622 664
- PATENT ABSTRACTS OF JAPAN vol. 005, no. 093 (M-074), 17. Juni 1981 (1981-06-17) -& JP 56 039815 A (TOYOTA MOTOR CORP), 15. April 1981 (1981-04-15)

## Beschreibung

Die Erfindung betrifft eine Räummaschine, bei der in einem Maschinengestell ein das Werkstück aufnehmender Maschinentisch, eine dazu relativ verschiebbar angetriebene Zugbrücke und eine oder mehrere mit dieser Zugbrücke koppelbare, axial arbeitende Räumwerkzeuge angeordnet sind.

Bekannt sind aus der 1988 veröffentlichten Druckschrift "Räummaschinen" der Hönnema GmbH, Am Stadtwald 8, 5757 Wickede, derartige Räummaschinen für die Innen- und/oder Außenbearbeitung von Werkstücken, beispielsweise zur Herstellung von Nuten, von Verzahnungen, oder dergleichen. Im einzelnen ist eine derartige Räummaschine in Vertikalanordnung bekannt, bei der in einem Maschinengestell horizontal ein das Werkstück aufnehmender Tisch vorgesehen ist. Unterhalb des Tisches ist über einen Spindelantrieb verschiebbar eine Zugbrücke vorgesehen, die mit dem oder den Räumwerkzeugen in Form von Räumspindeln koppelbar ist, die ihrerseits durch den Tisch hindurchgreifen. Die relativ langen Räumwerkzeuge sind in den Arbeitspositionen mit ihrem endseitigen Schaft in einem Schafthalter an der Zugbrücke in der Regel zangenartig aufgenommen. An den Schaft eines solchen Räumwerkzeuges schließt ein Einführungsabschnitt und daran der eigentliche die Schneiden tragende Räumabschnitt an. Das Räumwerkzeug kann mit seinem anderen Ende lösbar in einem Endstückhalter am Maschinengestell aufgenommen sein. Entsprechende Räumbearbeitungen erfordern eine große Arbeitslänge des Räumwerkzeuges. Daher muß das Räumwerkzeug durch das Werkstück und den Tisch über die Zugbrücke über einen langen Weg verschoben werden. Die Hubhöhe der Zugbrücke ist daher groß, so daß sowohl eine große Bauhöhe der Maschine erforderlich ist als sich auch zwangsläufig eine große Arbeitshöhe für das auf den Tisch aufzulegende bzw. zuzuführende Werkstück ergeben. Derartige Räummaschinen sind daher entweder mit entsprechenden Arbeitsgruben oder Arbeitsbühnen auszustatten. Die erforderlichen Längen der Räumwerkzeuge erfordern lange Spindelantriebe. Die endseitig gelagerten Spindeln des Spindeltriebes, auf dem die Zugbrücke in Mitnahmeverbindung aufgesetzt ist, lassen jedoch nur begrenzte Drehgeschwindigkeiten bzw. Bewegungsgeschwindigkeiten der Zugbrücke zu, da beim Überschreiten bestimmter Geschwindigkeiten Schwingungen im Spindelantrieb entstehen, die die Arbeitsgenauigkeit solcher Maschinen ungünstig beeinflussen.

Eine Senkrecht-Räummaschine gemäß dem Oberbegriff des Anspruchs 1 ist ebenfalls aus dem Gebrauchsmuster DE 296 22 664 U1 bekannt. Dabei nimmt ein als Zubringerschlitten bezeichneter Maschinentisch das zu bearbeitende Werkstück auf. Unter diesem Maschinentisch ist eine als Zubringerschlitten bezeichnete Zugbrücke gekoppelt angeordnet, an der mit entsprechenden Haltern das das Werkstück und den Maschinentisch durchdringende Räumwerkzeug festsetzbar ist. Während der Räumbearbeitung des Werkstückes wird der Maschinentisch zusammen mit der Zug- oder Drückbrücke auf Hubspindeln verfahren bei sich drehendem Räumwerkzeug, welches mit seinem oberen Endstück in einem Räumwerkzeughalter an einer feststehenden Quertraverse gehalten ist. Erst nach Beendigung des Räumvorganges wird der Maschinentisch zusammen mit der Zug- bzw. Drückbrücke nach unten verfahren zur Lösung des Werkzeuges aus seinem Halter und zur Abnahme des bearbeiteten Werkstückes.

Aufgabe der Erfindung ist es, das Bauvolumen von Räummaschinen eingangsgenannter Art zu verringern und ggf. auch die Arbeitsgeschwindigkeit sowohl bei der Bearbeitung als auch bezüglich der Rüstzeiten zu optimieren.

Gelöst wird die Erfindungsaufgabe mit einer Räummaschine mit den Merkmalen des Anspruchs 1. Dabei können solche Räummaschinen sowohl in vertikaler als auch in horizontaler Anordnung erfindungsgemäß ausgeführt werden.

Der gegenläufige Antrieb bzw. die Bewegung von Maschinentisch und Zugbrücke reduziert den notwendigen relativen Abstand von Maschinentisch und Zugbrücke bei der Bearbeitung und damit auch die Höhe bzw. die Länge einer solchen Räummaschine. Der Antrieb kann im Prinzip für den Maschinentisch und die Zugbrücke gemeinsam aber auch getrennt vorgesehen sein. Die gegenläufigen Bewegungen von Maschinentisch und Zugbrücke lassen höhere Geschwindigkeiten zu, sowohl während der Werkstückbearbeitung als auch beim Zurückfahren von Maschinentisch und Zugbrücke in ihre Anfangsposition.

Eine bevorzugte Ausführungsart einer solchen Räummaschine ist mit Anspruch 2 angegeben. Bei solchen Räummaschinen mit Spindeltrieben wirkt sich die gegenläufige Bewegung von Maschinentisch und Zugbrücke besonders günstig aus, da die Bewegungsgeschwindigkeiten bei Vermeidung von möglichen Schwingungen des Spindeltriebes und des darauf verschiebbar angeordneten Maschinentisches bzw. der Zugbrücke erhöhbar sind.

Als besonders vorteilhaft erweist es sich, bei solchen Spindelantrieben die synchron angetriebenen Spindeln zwischen ihren beiden gegenläufigen Gewindeabschnitten abgestützt zu lagern, wodurch den möglichen Schwingungen im Betrieb entgegengewirkt wird. In diesem Bereich können auch die Antriebskoppelungen erfolgen.

Insbesondere durch die Verfahrbarkeit des Räumwerkzeuges in Achsrichtung wird die Baulänge bzw. die Bauhöhe einer solchen Räummaschine günstig beeinflußt.

Anhand eines prinzipiell dargestellten Längsschnittes durch eine Räummaschine in Vertikalanordnung wird die Erfindung im Folgenden näher erläutert. Es zeigen:
- **Fig. 1**: die Räummaschine vor Beginn der Einkoppelung des Räumwerkzeuges in die Zugbrücke durch das auf dem Maschinentisch aufgelegte, zu bearbeitende Werkstück,
- **Fig. 2**: die entsprechende Darstellung der Maschine nach Durchdringung des Räumwerkzeuges durch das Werkstück und den Maschinentisch in der Ankoppelungsposition an der Zugbrücke,

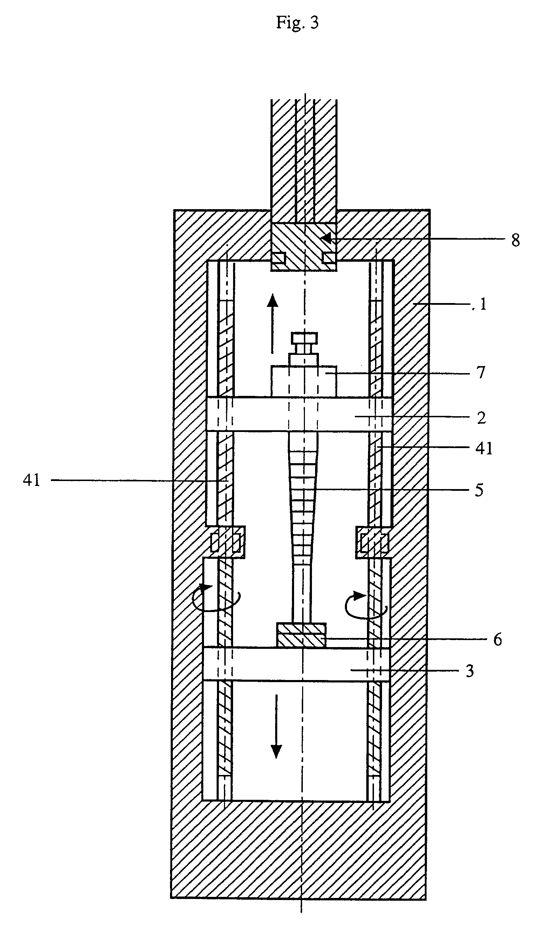

- **Fig. 3**: die Situation der Maschinenelemente nach Beendigung des Bearbeitungsvorganges des Werkstückes,
- **Fig. 4**: die Situation nach Rückführung von Maschinentisch und Zugbrücke zur Freigabe des bearbeiteten Werkstückes und
- **Fig. 5**: den Rückführungsvorgang beider Elemente vor der Ankoppelung des Räumwerkzeuges an seiner Antriebseinheit am Maschinengestell.

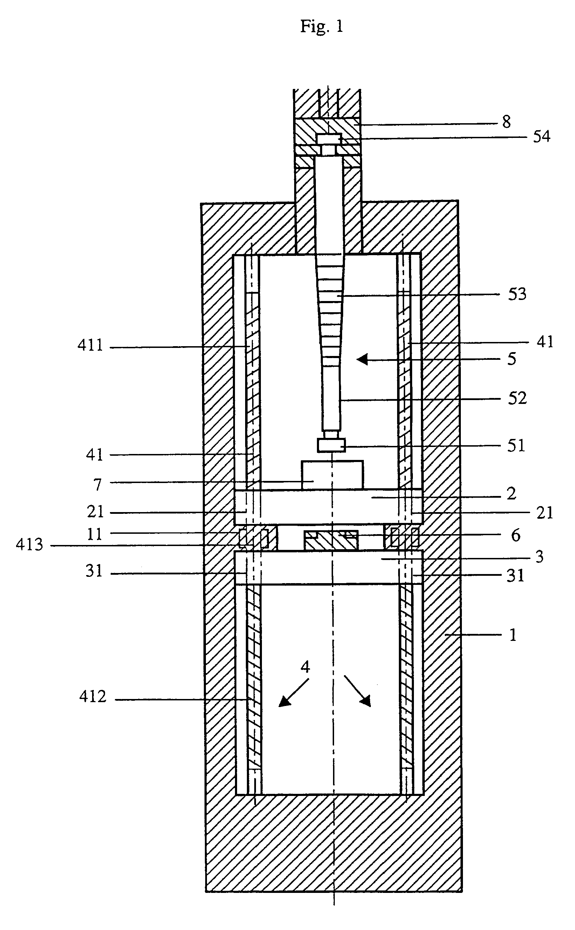

Zunächst wird auf Figur 1 Bezug genommen. Mit der Ziffer 1 ist das Maschinengestell einer vertikal angeordneten Räummaschine mit einem ebenfalls vertikal arbeitenden Räumwerkzeug 5 angedeutet. Auf den beiden oder auch mehreren Spindeln 41 eines motorisch angetriebenen Spindeltriebes 4 sind jeweils auf gegenläufigen Gewindenabschnitten 411 und 412 ein Maschinentisch 2 und eine Zugbrücke 3 in Mitnahmeverbindung gekoppelt aufgesetzt. Dabei sind im Maschinentisch 2 bzw. in der Zugbrücke 3 entsprechende Gewindebohrungen 21 und 31 vorgesehen, so daß bei Antrieb der Spindeln 41 Maschinentisch 2 und Zugbrücke 3 jeweils gegenläufige Bewegungen ausführen. Zweckmäßiger Weise sind beide Spindeln 41 synchron über einen gemeinsamen Antrieb gesteuert.

Mit einem mittigen gewindelosen Lagerabschnitt 413 sind die Spindeln 41 zusätzlich in maschinengestellseitigen Lagern 11 geführt.

Das insgesamt mit der Ziffer 5 bezeichnete Räumwerkzeug ist in der Ausgangsposition gemäß Figur 1 mit seinem Endstück 54 abkoppelbar in einem Endstückhalter seiner Antriebseinheit 8 aufgenommen. Dieses Räumwerkzeug 5 weist am anderen Ende einen Schaft 51 auf, der geeignet ist zur kraft- und formschlüssigen Ankoppelung an einem zangenartigen Schafthalter 6, der mit der Zugbrücke 3 verbunden ist. An diesen Schaft 51 schließt ein Einführungsabschnitt 52 an, der die Einführung in die zur bearbeitende Bohrung des beispielsweise gezeigten Werkstückes 7 dient, welches zentriert auf den Maschinentisch 2 angeordnet ist. Hinter diesem Einführungsabschnitt 52 beginnt der relativ lange Räumabschnitt 53 des Werkzeuges, über den die eigentliche Räumbearbeitung am Werkstück 7 erfolgt.

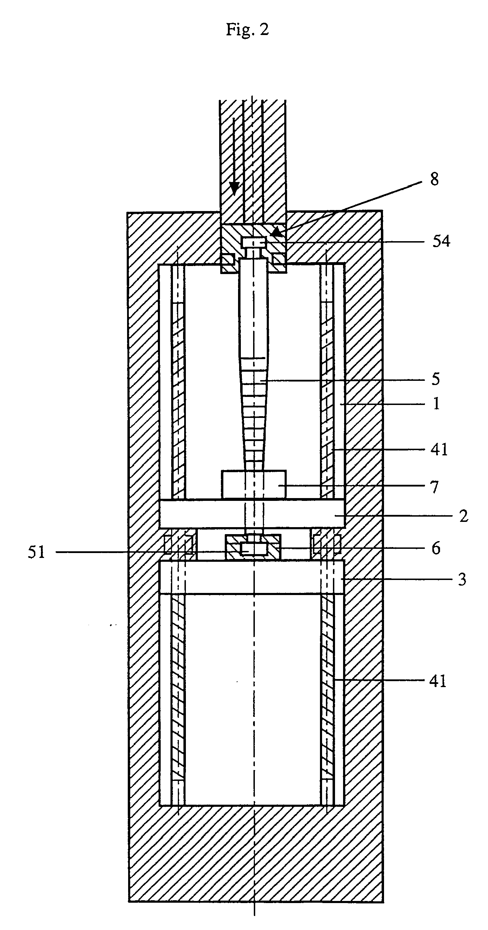

Wie Figur 2 zeigt, wird über die Antriebseinheit 8 das Räumwerkzeug 5 durch das Werkstück 7 und den Maschinentisch 2 verfahren bis zum Ankoppeln an bzw. in dem Schafthalter 6 mit seinem Schaft 51. Während des Zufahrens des Räumwerkes 5 verbleiben Maschinentisch 2 und Zugbrücke 3 in der gezeigten Ausgangsposition.

Nach Abkoppeln des Räumwerkzeuges 5 von seiner Antriebseinheit 8 bzw. dem darin aufgenommenen Endstückhalter werden Zugbrücke 3 und Maschinentisch 2 gegenläufig verfahren über den Spindelantrieb 4 bzw. die entsprechenden Spindeln 41 mit ihren gegenläufigen Gewindeabschnitten 411 und 412. Während dieser Verfahrung von Maschinentisch und Zugbrücke erfolgt die Bearbeitung des Werkstückes 7. Im vorliegenden Falle erfolgt die Innenbearbeitung eines solchen Werkstückes 7. Von ihrer in Figur 2 ersichtlichen Ausgangsposition werden beispielsweise Maschinentisch 2 und Zugbrücke 3 jeweils um den halben Arbeitsweg des Räumwerkzeuges 5 gegenläufig bewegt.

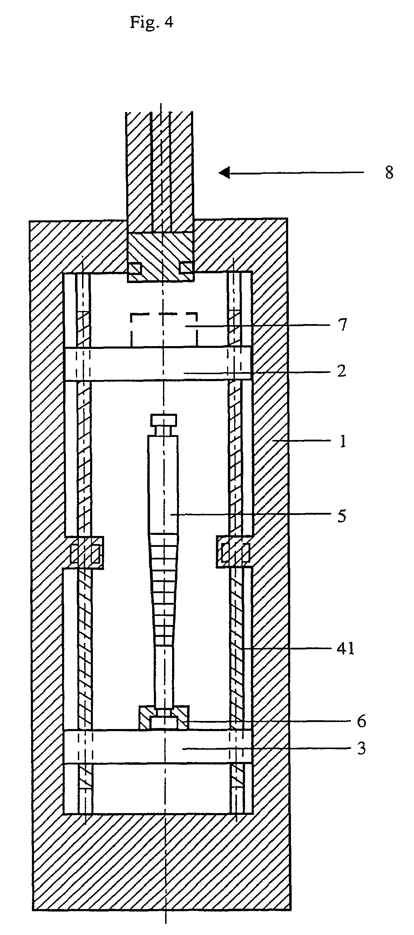

Nach der vollständigen Bearbeitung des Werkstückes 7 werden Maschinentisch 2 und Zugbrücke weiter gegenläufig auseinander bewegt, mindestens solange, bis das Werkstück 7 vom Räumwerkzeug 5 frei ist und daher entnommen werden kann. Diese Situation ist in Figur 4 dargestellt.

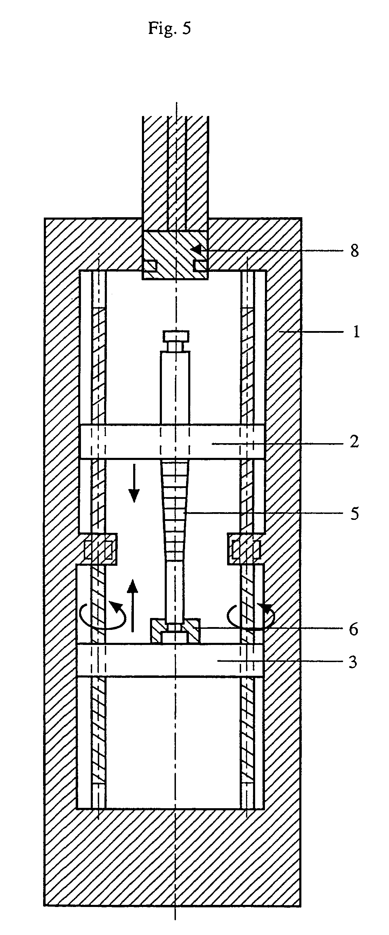

Gemäß Figur 5 werden Maschinentisch 2 und Zugbrücke 3 nach der Entnahme des Werkstückes 7 wiederum gegenläufig aufeinander zu bewegt. Danach erfolgt die Ankoppelung des Räumwerkzeuges 5 wiederum im Endstückhalter an der Antriebseinheit 8. Die Maschine gelangt in die Ausgangsposition gemäß Figur 1, in der erneut ein zu bearbeitendes Werkstück eingelegt werden kann.

Die Räummaschinen eignen sich auch für den Einsatz mehrerer parallel arbeitender Räumwerkzeuge zur Bearbeitung von einem oder mehreren Werkstücken.

### Zusammenstellung der Bezugszeichen

- 1: Maschinengestell
- 11: Lager

- 2: Maschinentisch
- 21: Gewindebohrung

- 3: Zugbrücke
- 31: Gewindebohrung

- 4: Spindeltrieb
- 41: Spindel
- 411: Gewindeabschnitt
- 412: Gewindeabschnitt
- 413: Lagerabschnitt

- 5: Räumwerkzeug
- 51: Schaft
- 52: Einführungsabschnitt
- 53: Räumabschnitt
- 54: Endstück

- 6: Schafthalter

- 7: Werkstück

- 8: Antriebeinheit mit Endstückhalter

## Patentansprüche

1. Räummaschine, bei der in einem Maschinengestell (1) ein das Werkstück (7) aufnehmender Maschinentisch (2), eine dazu relativ verschiebbar angetriebene Zugbrücke(3) und eine oder mehrere mit dieser Zugbrücke (3) koppelbare, in axialer Richtung arbeitende Räumwerkzeuge (5) angeordnet sind, **dadurch gekennzeichnet, dass** der Maschinentisch (2) und die Zugbrücke (3) während der Räumbearbeitung gleichzeitig gegenläufig angetrieben verschiebbar sind.

2. Räummaschine nach Anspruch 1, **dadurch gekennzeichnet, dass** Maschinentisch (2) und Zugbrücke (3) über einen gemeinsamen Spindeltrieb (4) angetrieben sind, wobei die Spindeln (41) des Spindeltriebes (4) gegenläufig Gewindeabschnitte (411, 412) aufweisen und der Maschinentisch (2) und die Zugbrücke 3) jeweils auf einem der beiden gegenläufigen Gewindeabschnitte (411 bzw. 412) in Mitnahmeverbindung aufgesetzt sind.

3. Räummaschine nach Anspruch 2, **dadurch gekennzeichnet, dass** die synchron angetriebenen Spindeln (41) des Spindelantriebes jeweils zwischen ihren beiden gegenläufigen Gewindeabschnitten (411 bzw. 412) gelagert sind.

4. Räummaschine nach Anspruch 2, **dadurch gekennzeichnet, dass** die Spindeln (41) zwischen den beiden Gewindeabschnitten (411, 412) angetrieben sind.

## Claims

1. Broaching machine, wherein a machine table (2), which receives the workpiece (7), a platform (3), which is displaceably driven relative to said table, and one or more broaching tools (5), which are connectable to said platform (3) and operate in the axial direction, are disposed in a machine frame (1), **characterised in that** the machine table (2) and the platform (3) are simultaneously displaceable, driven in opposite directions, during the broaching operation.

2. Broaching machine according to claim 1, **characterised in that** the machine table (2) and platform (3) are driven via a common spindle drive (4), the spindles (41) of the spindle drive (4) having oppositely orientated threaded portions (411, 412), and the machine table (2) and the platform (3) each being fastened to one of the two oppositely orientated threaded portions (411 or 412 respectively) with a driving connection.

3. Broaching machine according to claim 2, **characterised in that** the synchronously driven spindles (41) of the spindle drive are each mounted between their two oppositely orientated threaded portions (411 and 412 respectively).

4. Broaching machine according to claim 2, **characterised in that** the spindles (41) are driven between the two threaded portions (411, 412).

## Revendications

1. Machine de brochage pour laquelle sont disposés dans le châssis (1) d'une machine, une table de travail (2) supportant une pièce à usiner (7), un dispositif de traction (3) entraîné et coulissant de façon relative par rapport à celle-ci, et un ou plusieurs outils de brochage (5) travaillant selon une orientation axiale et pouvant être couplés à ce dispositif de traction (3) **caractérisée en ce que** la table de travail (2) et le dispositif de traction (3) peuvent être décalés simultanément par un entraînement opposé pendant le brochage.

2. Machine de brochage selon la revendication 1 **caractérisée en ce que** la table de travail (2) et le dispositif de traction (3) sont entraînés par une commande de broches (4) commune, les broches (41) de la commande de broches (4) présentant des tronçons filetés (411, 412) opposés et la table de travail (2) et le dispositif de traction (3) étant chacun disposés avec une liaison d'entraînement sur l'un des deux tronçons filetés opposés (411 ou 412).

3. Machine de brochage selon la revendication 2 **caractérisée en ce que** les broches (41) de la commande entraînées de manière synchrone sont maintenues entre leurs deux tronçons filetés (411 ou 412) opposés.

4. Machine de brochage selon la revendication 2 **caractérisée en ce que** les broches (41) sont entraînées entre leurs deux tronçons filetés (411, 412).
